# EUROPÄISCHE PATENTANMELDUNG

(11) **EP 4 745 446 A2**
(43) Veröffentlichungstag der Anmeldung: **20.05.2026**
(21) Anmeldenummer: 25214117.1
(22) Anmeldetag: 06.11.2025
(51) Int. Cl.: F16L 25/00, F16L 15/00, F16L 13/10, F16L 37/02, F16L 37/092

(54) **VENTILANSCHLUSSADAPTER SOWIE VENTILEINHEIT**

(30) Priorität: 19.11.2024 DE 202024106679 U
(71) Anmelder: Bürkert Werke GmbH & Co. KG, 74653 Ingelfingen (DE)
(72) Erfinder: BREUNINGER, Steffen, 74653 Ingelfingen (DE)
(74) Vertreter: Prinz & Partner mbB

(57) **Zusammenfassung**

Ein Ventilanschlussadapter (20) zum Anschließen eines fluidischen Anschlussrohres (88) an ein Ventil umfasst eine Adapterhülse (22), die ein ventilseitiges und ein entgegengesetztes, rohrseitiges axiales Ende und eine axiale Durchgangsöffnung (26) aufweist, wobei die Durchgangsöffnung (26) an einem rohrseitigen Endbereich (32) ein Innengewinde (34) und am ventilseitigen Endbereich eine Aufweitung (38) hat. Ferner wird eine Ventileinheit (10) vorgestellt.

## Beschreibung

Die Erfindung betrifft einen Ventilanschlussadapter zum Anschließen eines fluidischen Anschlussrohres an ein Ventil. Des Weiteren betrifft die Erfindung eine Ventileinheit mit einem solchen Ventilanschlussadapter.

Derartige Ventilanschlussadapter sowie Ventileinheiten mit einem Ventilanschlussadapter sind bekannt.

Ventileinheiten sind Teil von Ventilen oder Antrieben bzw. Steuergeräten für Ventile und haben ein oder mehrere Anschlüsse, über die fluidische Anschlussrohre angeschlossen werden können, um ein Fluid in das Ventil, den Antrieb oder das Steuergerät zu leiten bzw. aus diesem herauszuleiten.

Es gibt hierfür zwei Arten von Anschlüssen. Die eine Art hat in ihrer Durchgangsöffnung ein Innengewinde, in das das Anschlussrohr über ein komplementär gestaltetes Außengewinde an einem Axialende des Anschlussrohres eingeschraubt wird. Bei der zweiten Art wird das Anschlussrohr ohne Gewinde mittels einer im Anschluss angeordneten Spannhülse befestigt, die das Anschlussrohr umso fester klemmt, je stärker das Anschlussrohr in axialer Richtung aus dem Anschluss herausgezogen wird. Diese Spannhülsen sind auch unter der Bezeichnung "Collet" bekannt.

Da an die Anschlüsse jeweils entweder nur Anschlussrohre mit einem Außengewinde oder Anschlussrohre ohne Außengewinde angeschlossen werden können, haben Ventile üblicherweise sowohl Anschlüsse der einen Art als auch Anschlüsse der anderen Art.

Aufgabe der Erfindung ist es, ein Ventilanschlussadapter zum Anschließen eines fluidischen Anschlussrohres an ein Ventil bereitzustellen, mittels dem sowohl Anschlussrohre mit einem Außengewinde als auch Anschlussrohre ohne Außengewinde angeschlossen werden können. Aufgabe der Erfindung ist es ferner, eine Ventileinheit mit einem solchen Ventilanschlussadapter bereitzustellen.

Die Aufgabe wird gelöst durch einen Ventilanschlussadapter zum Anschließen eines fluidischen Anschlussrohres an ein Ventil, mit einer Adapterhülse, die ein ventilseitiges axiales Ende und ein entgegengesetztes, rohrseitiges axiales Ende sowie eine axiale Durchgangsöffnung hat. Die Durchgangsöffnung hat dabei an einem rohrseitigen Endbereich ein Innengewinde und am ventilseitigen Endbereich eine, insbesondere konische, Aufweitung.

Im Sinne der Erfindung werden unter dem Begriff "Ventil" ein Ventil, ein Antrieb eines Ventils und ein Steuergerät eines Ventils zusammengefasst. Das bedeutet, der Ventilanschlussadapter ist zum Anschließen eines fluidischen Anschlussrohres an ein Ventil, an einen Antrieb eines Ventils und/oder an ein Steuergerät eines Ventils ausgebildet.

Ferner umfasst im Sinne der Erfindung der Begriff "Anschlussrohr" jede Art von Rohren und Schläuchen, egal ob diese starr, flexibel oder elastisch gestaltet sind.

Es wurde erkannt, dass mittels des erfindungsgemäßen Ventilanschlussadapters einerseits Anschlussrohre mit einem Außengewinde angeschlossen werden können, indem das Anschlussrohr in den rohrseitigen Endbereich eingeschraubt wird, und andererseits Anschlussrohre ohne Außengewinde angeschlossen werden können, indem diese mittels einer Spannhülse im ventilseitigen Endbereich der Adapterhülse geklemmt werden. Auf diese Weise kann an jedem Anschluss, der mit einer derartigen Adapterhülse ausgebildet ist, ohne Spannhülse ein fluidisches Anschlussrohr mit Außengewinde angeschlossen werden und mit Spannhülse ein fluidisches Anschlussrohr ohne Außengewinde angeschlossen werden. Somit ist jeder dieser Anschlüsse flexibel für beide Anschlussarten ausgebildet. Es muss lediglich entsprechend der Anschlussart eine Spannhülse eingesetzt oder herausgenommen bzw. wegelassen werden.

In einer Ausführungsform geht der ventilseitige Endbereich zum ventilseitigen Ende hin in einen zylindrischen Abschnitt über. Diese Gestaltung hat den Vorteil, dass der zylindrische Abschnitt eine Aufnahme für einen zylindrisch gestalteten Bund der Spannhülse bildet, wodurch die Spannhülse besonders wirkungsvoll das Anschlussrohr klemmt, wenn dieses in axialer Richtung vom Ventil weg gezogen wird.

In einer weiteren Ausführungsform hat die Adapterhülse an ihrem Außenumfang Vertiefungen und/oder Vorsprünge, mittels denen die Adapterhülse formschlüssig mit einer Gehäusewand eines Ventilgehäuses verbunden werden kann.

Hierbei kann die Adapterhülse Umfangsnuten und/oder eine Verdrehsicherungskontur am Außenumfang haben, um die Adapterhülse besonders wirkungsvoll an der Gehäusewand zu befestigen und gegen axiales Herausziehen und/oder Verdrehen in Umfangsrichtung zu sichern.

Des Weiteren kann vorgesehen sein, dass der Ventilanschlussadapter eine mit axialen Schlitzen versehene Spannhülse aufweist, die ein ventilseitiges und ein entgegengesetztes, rohrseitiges axiales Ende hat und an ihrem ventilseitigen Ende, in von den Schlitzen definierten Segmenten einen radial nach außen vorspringenden Bund hat. Die Segmente und der Bund sind hierbei im Querschnitt so auf die Geometrie der Durchgangsöffnung abgestimmt, dass die Spannhülse unter Einfederung der Segmente nach innen axial in die Durchgangsöffnung einsteckbar ist und der Bund in die Aufweitung rastet. Durch diese Gestaltung wird die Spannhülse verliersicher an der Adapterhülse gehalten, auch wenn kein Anschlussrohr befestigt ist. Ferner ist ein mittels der Spannhülse angeschlossenes Anschlussrohr zuverlässig im Ventilanschlussadapter befestigt, da das Anschlussrohr umso fester geklemmt wird, je stärker das Anschlussrohr in axialer Richtung aus der Adapterhülse herausgezogen wird.

Gemäß eines Aspekts ist die Spannhülse hierbei so gestaltet, dass sie werkzeugfrei aus der Adapterhülse herausgezogen werden kann, wenn kein Anschlussrohr im Ventilanschlussadapter befestigt ist.

Ferner kann die Spannhülse einen umlaufenden Flansch an ihrem rohrseitigen Ende haben, der radial gegenüber der Adapterhülse vorsteht und einen axialen Anschlag bildet. Auf diese Weise ist eine definierte Anordnung der Spannhülse relativ zur Adapterhülse gewährleistet.

Erfindungsgemäß ist zur Lösung der oben genannten Aufgabe auch eine Ventileinheit mit einem erfindungsgemäßen Ventilanschlussadapter mit den zuvor genannten Vorteilen und einem Ventilgehäuse mit einer in der Gehäusewand des Ventilgehäuses ausgebildeten Anschlussöffnung vorgesehen, in der die Adapterhülse eingesetzt und darin gegen Verdrehen und axialen Auszug gesichert ist.

Hierbei kann die Adapterhülse in die Anschlussöffnung eingepresst, eingeklebt oder darin umspritzt sein, um diese mit geringem Aufwand wirkungsvoll an der Gehäusewand zu befestigen.

In einer Ausführungsform ist ein Anschlussrohr in das Gewinde der Adapterhülse eingeschraubt, wodurch dieses sicher befestigt und strömungsmäßig angeschlossen ist.

In einer alternativen Ausführungsform ragt ein Anschlussrohr in die Spannhülse und ist in dieser radial geklemmt, insbesondere wobei der Bund gegen die Wand der Aufweitung drückt. Auf diese Weise ist das Anschlussrohr sicher befestigt und strömungsmäßig angeschlossen, insbesondere wenn es kein Außengewinde aufweist.

Hierbei kann vorgesehen sein, dass die Spannhülse an ihrer Innenseite schräg einwärts und in Richtung zum Ventil hin abstehende Widerhakenfortsätze hat, die das aufgenommene Anschlussrohr axial sichern. Hierdurch ist das Anschlussrohr besonders zuverlässig gegen Herausziehen gesichert.

Ferner kann bei einer Ventileinheit mit einem eine Spannhülse aufweisenden Ventilanschlussadapter ein Dichtring auf einem Absatz in der Anschlussöffnung axial zwischen Absatz und einer Stirnseite der Spannhülse sitzen, um eine dichte strömungsmäßige Verbindung sicherzustellen.

Gemäß einer weiteren Ausführungsform hat die Anschlussöffnung einen Anschlag, auf dem die Adapterhülse stirnseitig aufliegt. Somit ist diese definiert in der Anschlussöffnung angeordnet und der Widerstand ist höher, wenn die Adapterhülse in Richtung des Ventils gedrückt wird.

Weitere Vorteile und Merkmale ergeben sich aus der nachfolgenden Beschreibung sowie aus den beigefügten Zeichnungen. In diesen zeigen:
- Figur 1 in einer Explosionsansicht eine erfindungsgemäße Ventileinheit mit einem erfindungsgemäßen Ventilanschlussadapter,
- Figur 2 in einer Schnittansicht die Ventileinheit aus Figur 1,
- Figur 3 in einer Schnittansicht eine Adapterhülse des Ventilanschlussadapters aus Figur 1,
- Figur 4 in einer Schnittansicht eine Spannhülse des Ventilanschlussadapters aus Figur 1,
- Figur 5 in einer Detailansicht die Ventileinheit aus Figur 1 im Schnitt,
- Figur 6 in einer Detailansicht die Ventileinheit aus Figur 1 mit einem Rohr, das mittels des Ventilanschlussadapters mit Spannhülse angeschlossen ist, und
- Figur 7 in einer Detailansicht die Ventileinheit aus Figur 1 mit einem Rohr, das ohne die Spannhülse mit der Adapterhülse verschraubt ist.

Die nachstehende detaillierte Beschreibung in Verbindung mit den beigefügten Zeichnungen, in denen gleiche Ziffern auf gleiche Elemente verweisen, ist als Beschreibung verschiedener Ausführungsformen des offengelegten Gegenstands gedacht und soll nicht die einzigen Ausführungsformen darstellen. Jede in dieser Offenbarung beschriebene Ausführungsform dient lediglich als Beispiel oder Illustration und sollte nicht als bevorzugt oder vorteilhaft gegenüber anderen Ausführungsformen ausgelegt werden.

Alle nachstehend in Bezug auf die Ausführungsbeispiele und/oder die begleitenden Figuren offengelegten Merkmale können allein oder in einer beliebigen Unterkombination mit Merkmalen der Aspekte der vorliegenden Offenbarung, einschließlich Merkmalen bevorzugter Ausführungsformen, kombiniert werden, vorausgesetzt, die sich ergebende Merkmalskombination ist für einen Fachmann auf dem Gebiet der Technik sinnvoll.

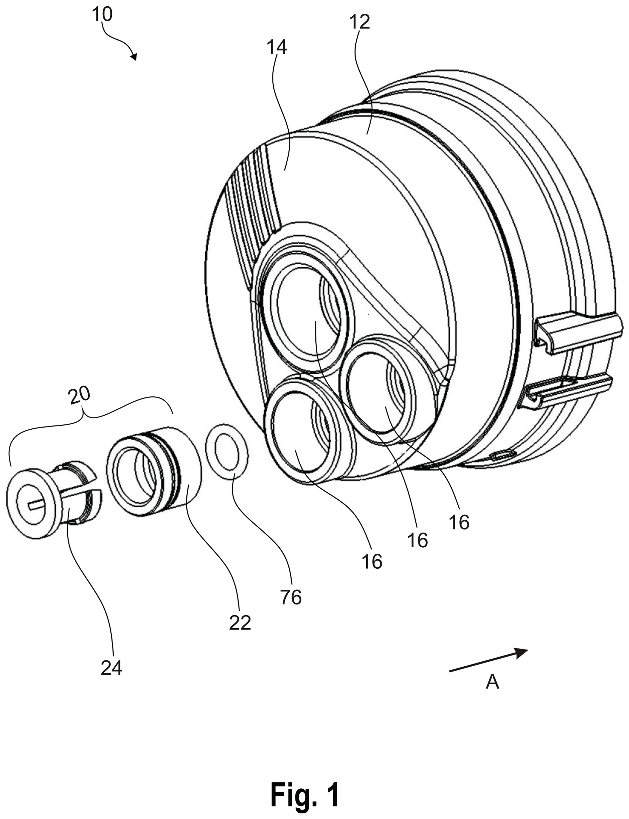

In Figur 1 ist ein Ventileinheit 10 mit einem Ventilgehäuse 12 und einem Ventilanschlussadapter 20 gezeigt.

Das Ventilgehäuse 12 ist beispielsweise Teil eines Ventils, eines Ventilantriebs oder eines Ventilsteuergeräts.

Das Ventilgehäuse 12 hat eine Gehäusewand 14 in Form einer axialen Stirnwand, in der drei Anschlussöffnungen 16 für jeweils eine Fluidleitung ausgebildet sind.

Selbstverständlich kann in einer alternativen Ausführungsform das Ventilgehäuse 12 eine beliebige Anzahl an Anschlussöffnungen 16 aufweisen.

Ferner kann jede der Anschlussöffnungen 16 einen Ventilanschlussadapter 20 aufweisen.

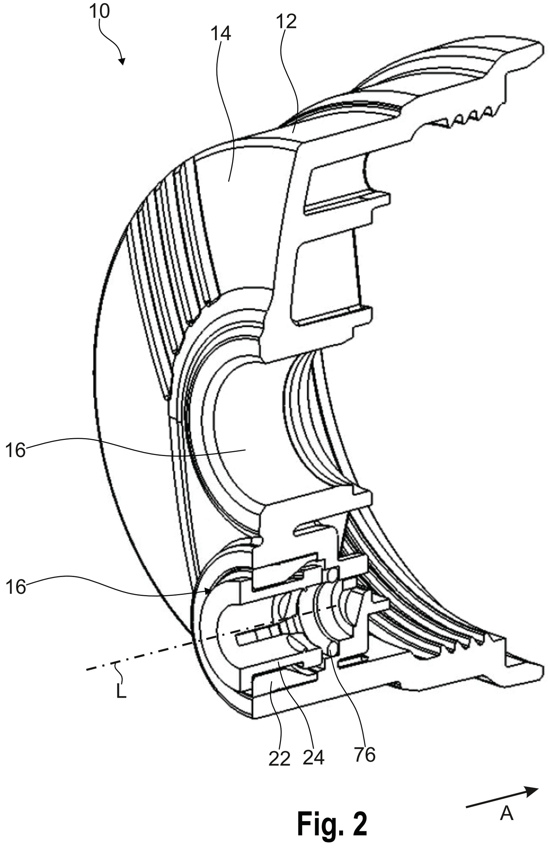

Der Ventilanschlussadapter 20 umfasst eine Adapterhülse 22 sowie eine optionale Spannhülse 24, die zusammen mit der Adapterhülse 22 verwendet werden kann (siehe Figur 2), um beispielsweise Anschlussrohre ohne Außengewinde anzuschließen, wie später erläutert wird.

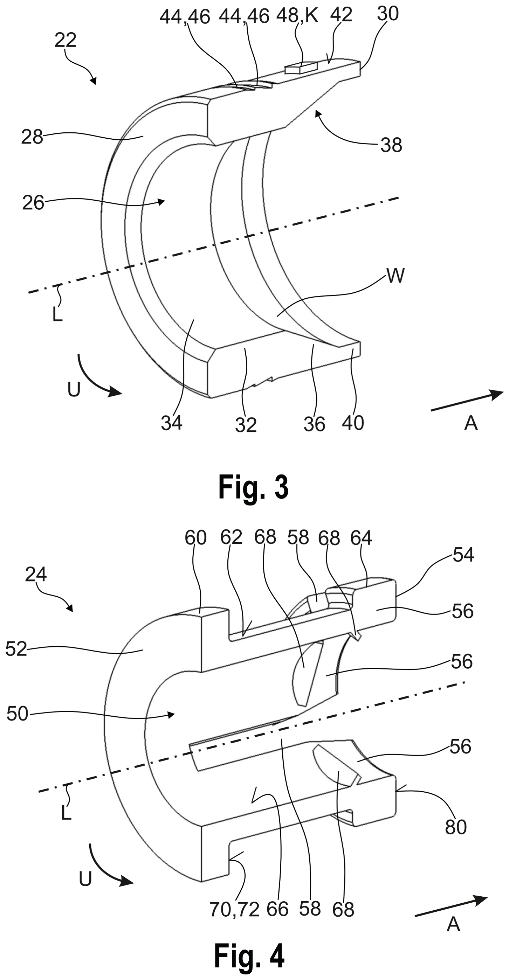

Die Adapterhülse 22 (siehe Figur 3) hat eine axiale Durchgangsöffnung 26, die sich von einem rohrseitigen axialen Ende 28 in axialer Richtung A zu einem entgegengesetzten ventilseitigen axialen Ende 30 erstreckt.

Benachbart zum rohrseitigen axialen Ende 28 hat die Adapterhülse 22 einen rohrseitigen Endbereich 32 mit einem Innengewinde 34.

Zwischen dem rohrseitigen Endbereich 32 und dem ventilseitigen axialen Ende 30 hat die Adapterhülse 22 einen ventilseitigen Endbereich 36 mit einer Aufweitung 38, die beispielsweise konisch gestaltet ist.

Grundsätzlich kann die Aufweitung 38 im Wesentlichen beliebig gestaltet sein, solange sich der radiale Querschnitt bzw. Durchmesser des ventilseitigen Endbereichs 36 in axialer Richtung A vergrößert, beispielsweise stetig.

In der vorliegenden Ausführungsform hat die Adapterhülse 22 benachbart zum ventilseitigen axialen Ende 30 einen zylindrischen Abschnitt 40, in den der ventilseitige Endbereich 36 in axialer Richtung A übergeht.

Alternativ kann der zylindrische Abschnitt 40 entfallen und der ventilseitige Endbereich 36 an das ventilseitige axiale Ende 30 angrenzen.

In einer weiteren alternativen Ausführungsform geht der ventilseitige Endbereich 36 in axialer Richtung A in einen an das ventilseitige axiale Ende 30 angrenzenden axialen Abschnitt über, der beliebig gestaltet ist.

An ihrem Außenumfang 42 hat die Adapterhülse 22 mehrere radiale Vertiefungen 44, die vorliegend jeweils durch eine in Umfangsrichtung U umlaufende Umfangsnut 46 gebildet sind.

Grundsätzlich kann der Außenumfang 42 der Adapterhülse 22 beliebig gestaltet sein, beispielsweise mit ein oder mehreren beliebig gestalteten radialen Vertiefungen 44.

Ferner hat die Adapterhülse 22 an ihrem Außenumfang 42 einen radialen Vorsprung 48, der hier blockförmig in radialer Richtung über den Außenumfang 42 hinausragt.

Selbstverständlich kann die Adapterhülse 22 in einer alternativen Ausführungsform an ihrem Außenumfang 42 eine beliebige Anzahl an radialen Vorsprüngen 48 haben, die jeweils beliebig gestaltet sind.

Abgesehen vom Innengewinde 34 und dem radialen Vorsprung 48, ist die Adapterhülse 22 im dargestellten Ausführungsbeispiel rotationssymmetrisch gegenüber ihrer Längsachse L gestaltet.

Die Spannhülse 24 (siehe Figur 4) hat eine Durchgangsöffnung 50, die sich von einem rohrseitigen axialen Ende 52 in axialer Richtung A zu einem entgegengesetzten ventilseitigen axialen Ende 54 erstreckt.

Ferner hat die Spannhülse 24 mehrere elastische Segmente 56, die durch axiale Schlitze 58 voneinander in Umfangsrichtung U beabstandet sind.

Die axialen Schlitze 58 erstrecken sich hierbei vom ventilseitigen axialen Ende 54 entgegen der axialen Richtung A zum rohrseitigen axialen Ende 52 hin.

Am rohrseitigen axialen Ende 52 hat die Spannhülse 24 einen in Umfangsrichtung U umlaufenden Flansch 60, der gegenüber einer äußeren Umfangsfläche 62 radial vorsteht.

Am ventilseitigen axialen Ende 54 hat die Spannhülse 24 einen gegenüber der Umfangsfläche 62 radial vorstehenden Bund 64, der in Umfangsrichtung U umläuft und durch die axialen Schlitze 58 unterbrochen ist. Mit anderen Worten weisen die Segmente 56 jeweils an ihrem ventilseitigen axialen Ende 54 radial außen einen Abschnitt des Bundes 64 auf.

Die Segmente 56 haben ferner an der an die Durchgangsöffnung 50 angrenzenden Innenseite 66 der Spannhülse 24 jeweils einen Widerhakenfortsatz 68, der sich in axialer Richtung A sowie radial nach innen und somit schräg von der Innenseite 66 zum ventilseitigen axialen Ende 54 in die Durchgangsöffnung 50 hinein erstreckt.

Abgesehen von den axialen Schlitzen 58 und den Widerhakenfortsätzen 68, ist die Spannhülse 24 im dargestellten Ausführungsbeispiel rotationssymmetrisch gegenüber ihrer Längsachse L gestaltet.

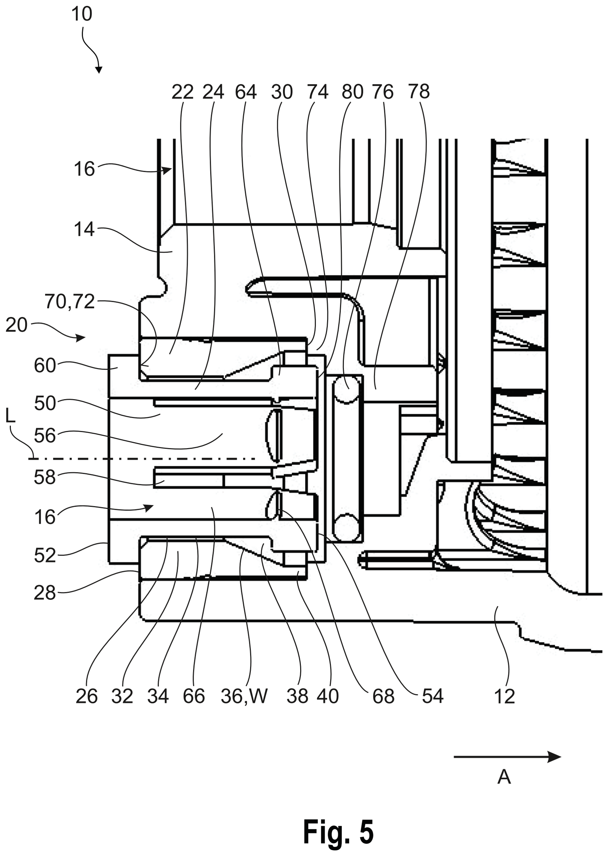

In allen Ausführungsformen ist die Spannhülse 24 so gestaltet bzw. dimensioniert, dass die Spannhülse 24 in axialer Richtung A mit dem ventilseitigen axialen Ende 54 voraus in die Durchgangsöffnung 26 der Adapterhülse 22 eingesetzt werden kann (siehe Figur 5). Die Adapterhülse 22 ist in diesem Zusammenhang derart gestaltet bzw. dimensioniert, dass hierbei die Segmente 56 im rohrseitigen Endbereich 32 zunächst elastisch radial nach innen ausgelenkt werden und anschließend im ventilseitigen Endbereich 36 radial nach außen Federn und dort mit dem Bund 64 in die Aufweitung 38 eingreifen.

Die Spannhülse 24 ist somit verliersicher in der Adapterhülse 22 gehalten.

Im miteinander verbundene Zustand sind die Adapterhülse 22 und die Spannhülse 24 beispielsweise koaxial zueinander ausgerichtet, d.h., die Längsachse L der Adapterhülse 22 und die Längsachse L der Spannhülse 24 sind identisch.

Der Flanschs 60 (siehe Figur 5) ragt im miteinander verbundenen Zustand in radialer Richtung über die Durchgangsöffnungen 26 der Adapterhülse 22 hinaus und hat eine der Adapterhülse 22 zugewandte Stirnseite 70, die einen axialen Anschlag 72 für das rohrseitige axiale Ende 28 der Adapterhülse 22 bildet.

Um die Spannhülse 24 wieder von der Adapterhülse 22 zu trennen, kann die Spannhülse 24 entgegen der axialen Richtung A aus der Durchgangsöffnung 26 der Adapterhülse 22 herausgezogen werden. Hierbei werden die Segmente 56 durch eine die Aufweitung 38 begrenzende Wand W elastisch radial nach innen ausgelenkt, sodass der Bund 64 durch die Durchgangsöffnung 26 der Adapterhülse 22 passt.

Des Weiteren ist die Adapterhülse 22 aus Metall gefertigt, wodurch das Innengewinde 34 besonders robust gestaltet ist.

Alternativ kann die Adapterhülse 22 aus Kunststoff gefertigt sein.

Die Spannhülse 24 ist beispielsweise aus Kunststoff oder Metall gefertigt.

Das Ventilgehäuse 12 ist ein Spritzgussteil, beispielsweise aus Kunststoff.

Im vorliegenden Ausführungsbeispiel wurde bei der Herstellung der Ventileinheit 10 die Adapterhülse 22 in der Anschlussöffnung 16 umspritzt und ist somit form- und stoffschlüssig mit der Gehäusewand 14 verbunden (siehe Figur 5).

Die radialen Vertiefungen 44 bilden in diesem Zusammenhang eine axiale Auszugssicherung, die gewährleistet, dass die Adapterhülse 22 nicht entgegen der axialen Richtung A aus der Anschlussöffnung 16 herausgezogen werden kann.

Ferner bildet der radiale Vorsprung 48 eine Verdrehsicherungskontur K (siehe Figur 3), die verhindert, dass die Adapterhülse 22 in Umfangsrichtung U relativ zur Gehäusewand 14 verdreht werden kann.

Die Adapterhülse 22 ist somit starr an der Gehäusewand 14 befestigt.

Alternativ kann die Adapterhülse 22 in die Anschlussöffnung 16 eingepresst und/oder eingeklebt werden.

Die Gehäusewand 14 hat benachbart zur Anschlussöffnung 16 einen Anschlag 74 (siehe Figur 5) in Form eines Absatzes, an dem die Adapterhülse 22 stirnseitig mit dem ventilseitigen axialen Ende 30 in axialer Richtung A anliegt.

Ferner weist die Ventileinheit 10 einen Dichtring 76 auf, der in axialer Richtung A an einen Absatz 78 der Gehäusewand 14 angrenzt, der die Anschlussöffnung 16 begrenzt.

Der Dichtring 76 ist hierbei axial gegenüberliegend zu einer Stirnseite 80 am ventilseitigen axialen Ende 54 der Spannhülse 24 und somit in axialer Richtung A zwischen der Stirnseite 80 der Spannhülse 24 und dem Absatz 78 der Gehäusewand 14 angeordnet.

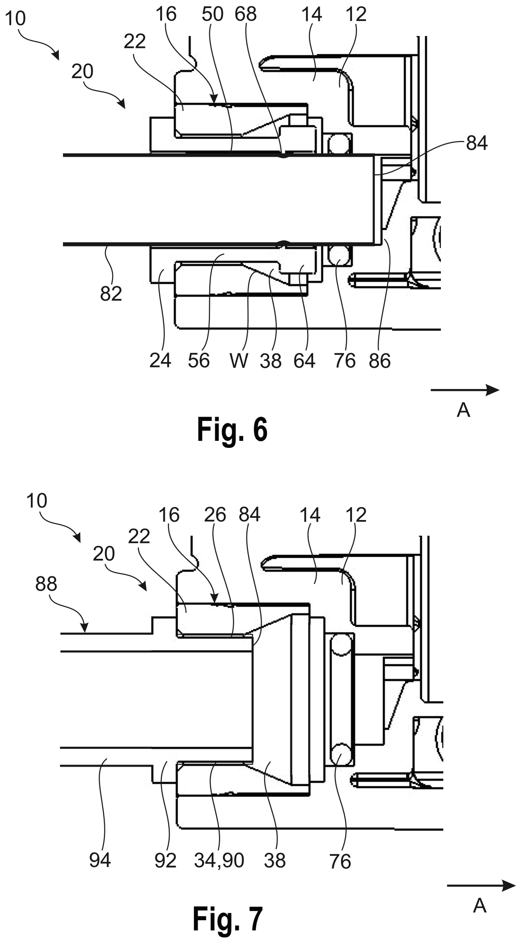

In Figur 6 ist gezeigt, wie ein fluidisches Anschlussrohr 82 mittels der Adapterhülse 22 und der Spannhülse 24 mit der Anschlussöffnung 16 verbunden ist.

Um das Anschlussrohr 82 mit der Anschlussöffnung 16 zu verbinden, wird das Anschlussrohr 82 mit einem Anschlussende 84 in axialer Richtung A in die Durchgangsöffnung 50 der Spannhülse 24 eingeschoben, bis das Anschlussrohr 82 sich durch den Dichtring 76 erstreckt.

Der Dichtring 76 liegt hierbei dicht am Außenumfang des Anschlussrohres 82 an.

Das Ventilgehäuse 12 hat im vorliegenden Ausführungsbeispiel einen weiteren Absatz 86, der einen axialen Anschlag für das Anschlussende 84 bildet und somit zuverlässig sicherstellt, dass das Anschlussrohr 82 weit genug bzw. definiert in der Anschlussöffnung 16 angeordnet ist.

Das Anschlussrohr 82 hat in diesem Zusammenhang einen Durchmesser, der im Wesentlichen dem Durchmesser der Durchgangsöffnung 50 der Spannhülse 24 entspricht. Hierdurch liegen die Widerhakenfortsätze 68 direkt radial außen am Anschlussrohr 82 an.

Wird das Anschlussrohr 82 entgegen der axialen Richtung A aus der Anschlussöffnung 16 gezogen, so bewirken die Widerhakenfortsätze 68, dass die Spannhülse 24 zusammen mit dem Anschlussrohr 82 gegenüber der Adapterhülse 22 entgegen der axialen Richtung A verschoben werden.

Hierbei wird der Bund 64 gegen die Wand W der Aufweitung 38 gedrückt, wodurch die Segmente 56 zunehmend in radialer Richtung nach innen gedrückt werden und das Anschlussrohr 82 entsprechend zunehmend fester klemmen.

Die hierbei auf das Anschlussrohr 82 aufgebrachte Klemmkraft kann so groß sein, dass das Anschlussrohr 82 nicht von Hand unbeabsichtigt abgezogen werden kann und somit axial gesichert ist.

Um das Anschlussrohr 82 beabsichtigt vom Ventilanschlussadapter 20 zu trennen, ist es erforderlich, die Spannhülse 24 axial gegenüber der Adapterhülse 22 zu sichern, beispielsweise mit einer Hand, während mit der anderen Hand das Anschlussrohre 82 entgegen der axialen Richtung A aus der Durchgangsöffnungen 50 der Spannhülse 24 herausgezogen wird.

Auf diese Weise werden die Segmente 56 nicht zusammengedrückt und somit das Anschlussrohr 82 auch nicht von der Spannhülse 24 radial geklemmt.

Alternativ kann, wie in Figur 7 dargestellt ist, ein fluidisches Anschlussrohr 88 mit einem zum Innengewinde 34 der Adapterhülse 22 komplementär gestalteten Außengewindes 90 mittels der Adapterhülse 22 mit der Anschlussöffnung 16 verbunden werden.

Das Außengewinde 90 ist hier Teil eines Rohranschlusses 92, der mit einem Rohrabschnitt 94 des Anschlussrohres 88 verbunden ist und das Anschlussende 84 des Anschlussrohres 88 bildet.

In einer alternativen Ausführungsform ist das Außengewinde 90 unmittelbar in der äußeren Mantelfläche des Anschlussrohres 88 bzw. des Rohrabschnitts 94 ausgebildet.

Um das Anschlussrohr 88 an die Anschlussöffnung 16 anzuschließen, wird zunächst die Spannhülse 24 aus der Adapterhülse 22 herausgenommen bzw. die Adapterhülse 22 ohne die Spannhülse 24 verwendet.

Nun wird das Anschlussrohr 88 über das Außengewinde 90 mit dem Innengewinde 34 der Adapterhülse 22 verschraubt und somit zuverlässig sowie dicht mit dem Ventilgehäuse 12 verbunden.

Hierbei kann der Rohranschluss 92 in Umfangsrichtung U relativ zum Rohrabschnitt 94 drehbar sein, sodass das Anschlussende 84 mit der Adapterhülse 22 verschraubt werden kann, ohne dass der Rohrabschnitt 94 mitgedreht werden muss.

Auf diese Weise sind ein Ventilanschlussadapter 20 sowie eine Ventileinheit 10 mit einem Ventilanschlussadapter 20 bereitgestellt, über die, je nach Bedarf, sowohl Anschlussrohre 82 ohne Außengewinde 90 als auch Anschlussrohre 88 mit Außengewinde 90 wirkungsvoll und zuverlässig strömungsmäßig an die Anschlussöffnung 16 angeschlossen werden können.

Somit kann jede Anschlussöffnung 16, die mit einem Ventilanschlussadapter 20 ausgebildet ist, flexibel für beide Arten von Anschlussrohren 82, 88 verwendet werden.

## Patentansprüche

1. Ventilanschlussadapter (20) zum Anschließen eines fluidischen Anschlussrohres (82, 88) an ein Ventil, mit einer Adapterhülse (22), die ein ventilseitiges und ein entgegengesetztes, rohrseitiges axiales Ende (28, 30) und eine axiale Durchgangsöffnung (26) hat, wobei die Durchgangsöffnung (26) an einem rohrseitigen Endbereich (32) ein Innengewinde (34) hat und am ventilseitigen Endbereich (36) eine Aufweitung (38) hat.

2. Ventilanschlussadapter (20) nach Anspruch 1, **dadurch gekennzeichnet, dass** die Aufweitung (38) konisch ist.

3. Ventilanschlussadapter (20) nach Anspruch 1 oder 2, **dadurch gekennzeichnet, dass** der ventilseitige Endbereich (36) zum ventilseitigen Ende (30) hin in einen zylindrischen Abschnitt (40) übergeht.

4. Ventilanschlussadapter (20) nach einem der vorhergehenden Ansprüche, **dadurch gekennzeichnet, dass** die Adapterhülse (22) an ihrem Außenumfang (42) Vertiefungen (44) und/oder Vorsprünge (48) hat.

5. Ventilanschlussadapter (20) nach einem der vorhergehenden Ansprüche, **dadurch gekennzeichnet, dass** die Adapterhülse (22) Umfangsnuten (46) und/oder eine Verdrehsicherungskontur (K) am Außenumfang (42) hat.

6. Ventilanschlussadapter (20) nach einem der vorhergehenden Ansprüche, **dadurch gekennzeichnet, dass** der Ventilanschlussadapter (20) eine mit axialen Schlitzen (58) versehene Spannhülse (24) aufweist, die ein ventilseitiges und ein entgegengesetztes, rohrseitiges axiales Ende (52, 54) hat und an ihrem ventilseitigen Ende (54), in von den Schlitzen (58) definierten Segmenten (56) einen radial nach außen vorspringenden Bund (64) hat, wobei die Segmente (56) und der Bund (64) im Querschnitt so auf die Geometrie der Durchgangsöffnung (26) abgestimmt sind, dass die Spannhülse (24) unter Einfederung der Segmente (56) nach innen axial in die Durchgangsöffnung (26) einsteckbar ist und der Bund (64) in die Aufweitung (38) rastet.

7. Ventilanschlussadapter (20) nach Anspruch 6, **dadurch gekennzeichnet, dass** die Spannhülse (24) einen umlaufenden Flansch (60) an ihrem rohrseitigen Ende (52) hat, der radial gegenüber der Adapterhülse (22) vorsteht und einen axialen Anschlag (72) bildet.

8. Ventileinheit (10) mit einem Ventilanschlussadapter (20) nach einem der vorhergehenden Ansprüche und einem Ventilgehäuse (12) mit einer in der Gehäusewand (14) des Ventilgehäuses (12) ausgebildeten Anschlussöffnung (16), in der die Adapterhülse (22) eingesetzt und darin gegen Verdrehen und axialen Auszug gesichert ist.

9. Ventileinheit (10) nach Anspruch 8, **dadurch gekennzeichnet, dass** die Adapterhülse (22) in die Anschlussöffnung (16) eingepresst, eingeklebt oder darin umspritzt ist.

10. Ventileinheit (10) nach Anspruch 8 oder 9, **dadurch gekennzeichnet, dass** ein Anschlussrohr (88) in das Gewinde (34) der Adapterhülse (22) eingeschraubt ist.

11. Ventileinheit (10) nach Anspruch 8 oder 9 mit einem Ventilanschlussadapter (20) nach Anspruch 6 oder 7, **dadurch gekennzeichnet, dass** ein Anschlussrohr (82) in die Spannhülse (24) ragt und in dieser radial geklemmt ist, insbesondere wobei der Bund (64) gegen die Wand (W) der Aufweitung (38) drückt.

12. Ventileinheit (10) nach Anspruch 11, **dadurch gekennzeichnet, dass** die Spannhülse (24) an ihrer Innenseite (66) schräg einwärts und in Richtung zum Ventil hin abstehende Widerhakenfortsätze (68) hat, die das aufgenommene Anschlussrohr (82) axial sichern.

13. Ventileinheit (10) nach einem der Ansprüche 8 bis 12 mit einem Ventilanschlussadapter (20) nach Anspruch 6 oder 7, **dadurch gekennzeichnet, dass** ein Dichtring (76) auf einem Absatz (78) in der Anschlussöffnung (16) axial zwischen Absatz (78) und einer Stirnseite (80) der Spannhülse (24) sitzt.

14. Ventileinheit (10) nach einem der Ansprüche 8 bis 13, **dadurch gekennzeichnet, dass** die Anschlussöffnung (16) einen Anschlag (74) hat, auf der die Adapterhülse (22) stirnseitig aufliegt.
